Europäisches Patentamt

European Patent Office

Office européen des brevets

(11) Veröffentlichungsnummer: **0 214 402**
**B1**

(12) **EUROPÄISCHE PATENTSCHRIFT**

(45) Veröffentlichungstag der Patentschrift:
19.09.90

(51) Int. Cl.⁵: **F16C 33/24,** F16C 33/72,
F16J 9/28, C04B 35/58

(21) Anmeldenummer: 86109543.8

(22) Anmeldetag: 11.07.86

(54) Gleitelementepaarung.

(30) Priorität: 13.08.85 DE 3528934

(43) Veröffentlichungstag der Anmeldung:
18.03.87 Patentblatt 87/12

(45) Bekanntmachung des Hinweises auf die Patenterteilung:
19.09.90 Patentblatt 90/38

(84) Benannte Vertragsstaaten:
AT BE CH DE FR GB IT LI NL SE

(56) Entgegenhaltungen:
EP-A- 0 118 056
EP-A- 0 178 169
JP-A-53 137 214
JP-A-59 047 523

(73) Patentinhaber: Feldmühle Aktiengesellschaft,
Fritz-Vomfelde-Platz 4, D-4000 Düsseldorf 11(DE)

(72) Erfinder: Comans, Hans-Jürgen, Grundend 15,
D-4150 Krefeld-Fischeln(DE)
Erfinder: Krohn, Ulrich, Dr. Dipl.-Ing., Elsterweg 8,
D-7520 Leonberg 1(DE)
Erfinder: Jud, Hans, Dipl.-Ing., Hertfelder Strasse 78,
D-7300 Esslingen(DE)
Erfinder: Rittel, Hans-Gerd, Max-Eyth-Strasse 53,
D-7317 Wendlingen(DE)

**Beschreibung**

Die vorliegende Erfindung betrifft eine Gleitelementepaarung gemäß dem Gattungsbegriff des Hauptanspruches.

Aus dem Stand der Technik ist eine Vielzahl von Gleitelementepaarungen, insbesondere in Form von axialen Gleitringdichtungen oder Dichtscheiben für Armaturen bekannt.

Die GB-A 1 434 365 beschreibt Gleitringdichtungen, bei denen eines der beiden in Eingriff stehenden Elemente eine Beschichtung aus Borkarbid aufweist. Vergleichsweise wird auf ein aus heißgepreßtem Siliziumnitrid hergestelltes Gleitelement verwiesen, das in Eingriff mit einem Gegenelement aus Kohle steht. Diese Gleitelementepaarung wurde offensichtlich als nicht besonders geeignet angesehen.

Die EP-A 0 118 056 betrifft die Verwendung von harten, oxidkeramischen Werkstoffen wie Aluminiumoxid und Zirkonoxid und/oder nichtoxidkeramischen Werkstoffen wie Siliziumoxid oder Siliziumnitrid als Lagerteile für den Läufer einer Pumpe, die mit Hilfe einer hermetisch abgeschlossenen Permanentmagnetkupplung betrieben wird. Eine abdichtende Funktion kommt den keramischen Lagerteilen nicht zu.

Aus der JP-A 5 947 523 ist eine Gleitelementepaarung bekannt, bei der ein Element aus Siliziumnitrid und das Gegenelement aus einem metallischen Substrat besteht, das mit einer Mischung aus $Al_2O_3/TiO_2$ im Verhältnis von 70% bis 50% $Al_2O_3$ und von 30% bis 50% $TiO_2$ beschichtet ist.

Gleitelemente aus Siliziumnitrid sind auch in den japanischen Patentanmeldungen 50 223, 34 020 und 16 0625 beschrieben und sollen in Eingriff stehen mit Gegenelementen aus einem mit Chromoxid beschichteten Material, mit Gegenelementen auf Basis von Kupfer/Nickel oder mit nicht näher beschriebenen Gegenelementen aus Metall.

In dem NL-Buch Progress in Nitrogen Ceramics, 1983, Seite 683 bis 693, wird auch eine Gleitelementepaarung beschrieben, bei der beide Elemente aus Sialon (Siliziumaluminiumoxinitrid) bestehen.

Auch zur Herstellung von Dichtscheiben für Mischbatterien wurde bereits eine Vielzahl von Werkstoffen vorgeschlagen.

In der Vergangenheit wurden Dichtscheiben für Mischbatterien zumeist aus Aluminiumoxid, zum Teil in Abmischung mit z.B. Zirkoniumoxid, hergestellt. Ältere Veröffentlichungen, zu denen z.B. die DE-B 1 282 377; FR-A 1 454 755; DE-B 1 291 957; DE-A 2 834 146 gehören, betreffen Gleit- bzw. Gegenelemente aus Werkstoffen auf Basis Aluminiumoxid. Diesen Vorschlägen haften noch gewisse Nachteile an, insbesondere weisen die bekannten Gleitelementepaarungen den Nachteil einer zu hohen Haftreibung auf.

Ein jüngerer Vorschlag der Anmelderin sieht gemäß der EP-B 43 456 dagegen eine spezielle Mischung keramischer Werkstoffkomponenten zur Erzielung eines besonders niedrigen Profiltraganteiles vor.

Dieser Vorschlag überwindet zwar erstmalig das Vorurteil, das bisher darin bestanden hat, eine ausreichende Abdichtwirkung sei nur mit hohem Profiltraganteil zu erzielen, jedoch beinhaltet dieser Vorschlag auch noch gewisse fertigungstechnische Nachteile, die dadurch entstehen, daß infolge der außerordentlich hohen Feinheit der keramischen Ausgangspulver in vielen Fällen die Fertigungskosten infolge des hohen Energieverbrauchs ein wirtschaftlich vertretbares Maß überschreiten. In jüngeren und noch nicht veröffentlichten Patentanmeldungen wurde von der Anmelderin auch bereits eine Oberflächenbehandlung durch Ätzen oder Beschichten vorgeschlagen, um auf diese Weise Gleitelemente mit einem geringeren Reibungskoeffizienten zu erhalten. Diese Verfahren der Oberflächenbearbeitung führen zwar zu sehr guten Ergebnissen in bezug auf Gleitelemente mit reduzierter Haftreibung und verfügen auch über eine ausgezeichnete abdichtende Wirkung, jedoch sind die beschriebenen Techniken kostenaufwendig, so daß die nach diesen Verfahren hergestellten Gleitelemente unter wirtschaftlichen Bedingungen nicht überall einsetzbar sind.

In der italienischen Patentanmeldung 67 746-A/82 wurde auch bereits eine Gleitelementepaarung mit Elementen aus Hartmaterialien mit unterschiedlichen Eigenschaften vorgeschlagen, wobei mindestens eines der Plättchen aus Siliziumkarbid besteht.

Einer der Nachteile dieses Vorschlages liegt darin, daß durch die dort vorgeschlagene Kombination von Reibungselementen größerer Härte mit Gleitelementen einer geringeren Härte bzw. einer weniger glatten Oberfläche, wodurch die Berührungsfläche zwischen den beiden zusammenwirkenden Gleitelementen verringert und dadurch eine geringere Reibung erzielt werden soll, relativ hohe Kosten durch die Verwendung von Siliziumkarbid entstehen und infolge der unterschiedlichen Härte der Gleitelemente, das härtere quasi als oberflächenbearbeitendes Werkzeug für das andere weniger harte Gleitelement wirksam wird und dabei eine unerwünschte Oberflächenveränderung des weniger harten Gleitelementes resultiert.

Außerdem kann bei einer Reibungspartnerpaarung, z. B. einer Dichtscheibenpaarung einer sanitären Mischbatterie, bei der eine Dichtscheibe aus Siliziumkarbid besteht und eine Dichtscheibe eine gegenüber der anderen Dichtscheibe kompliziertere Geometrie aufweist, die Dichtscheibe mit der komplizierteren Form nicht aus Siliziumkarbid, sondern muß z. B. aus Aluminiumoxid hergestellt werden. Dies ergibt sich aus der bekannten Problematik bei der Fertigung von Siliziumkarbidbauteilen, birgt aber den Nachteil, daß gerade die infolge ihrer komplizierteren Bauform besonders thermoschockempfindliche Dichtscheibe nicht aus dem an sich besonders thermoschockunempfindlichen Siliziumkarbid hergestellt werden kann.

Die bestehenden Nachteile von Siliziumcarbid erklären sich durch die nicht ausreichend hohe Zähigkeit dieses relativen spröden Werkstoffes, so daß es vielfach bereits während der Herstellung zum Abplatzen an aus Siliziumcarbid hergestellten Bauteilen kommt, insbesodere, wenn sie in komplizierter Form ausgebildet sind und während ihrer Herstellung stoßartig in Berührung kommen, z.B.: beim Sandstrahlen und wenn sie als Massenartikel schüttgutmäßig transportiert werden.

Schließlich sieht das DE-U 80 12 995 bei einer verschleißfesten Armatur für strömende Stoffe Siliziumkarbid oder Siliziumnitrid für die Herstellung verschiedener Bauteile vor. Einer Vorschlag zur Auswahl der mit den Bauteilen aus Siliziumkarbid und Siliziumnitrid in Eingriff stehenden weiteren Bauteile enthält dieses Dokument nicht.

Gegenüber dem bekannten Stand der Technik hat sich die vorliegende Erfindung zur Aufgabe gemacht, eine Gleitelementepaarung zu entwickeln, deren Elemente unter Verzicht auf aufwendige Oberflächenbehandlungsverfahren aus an sich bekannten keramischen Werkstoffen herstellbar sind. Die Gleitelementepaarung soll über eine gute abdichtende Wirkung verfügen und dabei über eine im Vergleich zu den bekannten unbeschichteten Keramikelementen aus z. B. Aluminiumoxid über verringerte Reibungskoeffizienten, insbesondere über einen geringen Haftreibungskoeffizienten, verfügen.

Die Lösung der anstehenden Aufgabe gelingt bei einer Gleitelementepaarung der eingangs erwähnten Art, die die kennzeichnenden Merkmale des Patentanspruches 1 aufweist.

Siliziumnitridwerkstoffe sind zwar seit langem zur Herstellung von Gleitelementen bekannt, wurden aber bisher nicht mit Gegenelementen aus Aluminiumoxid kombiniert. Die Eignung der erfindungsgemäß vorgeschlagenen Gleitelementepaarung ist insofern als überraschend anzusehen, als sowohl das Gleitelement aus Siliziumnitrid als auch das Gegenelement aus Aluminiumoxid einen hohen Profiltraganteil aufweisen, so daß aufgrund früher angestellter fachmäßiger Überlegungen im Grunde genommen auch hohe Reibungskoeffizienten zu erwarten waren.

Es ist noch nicht mit letzter Sicherheit geklärt, auf welchen Einfluß die geringen Reibungskoeffizienten bei der Gleit- und Haftreibung zurückzuführen sind. Es darf jedoch vermutet werden, daß durch den hohen Anteil kovalenter Bindungen bei dem Gleitelement aus Siliziumnitridwerkstoff nur wenig freie Elektronen in Orbitalen mit geringer Ausladung an der Oberfläche des Gleitelementes zur Verfügung stehen und dadurch eine nur sehr geringe Neigung zur Bildung physikalischer oder chemischer Bindungen gegenüber dem Gegenelement besteht.

Auch hinsichtlich der festgestellten hohen Verschleißfestigkeit ist die vorliegende Erfindung als ein glücklicher Griff zu werten. Nachdem die aus dem Stand der Technik bekanntgewordenen Kombinationen von Siliziumnitridwerkstoffen, z. B. als Elemente einer axialen Gleitringdichtung mit Gegenelementen aus einer Vielzahl unterschiedlicher Werkstoffe, wie z. B. Metall- oder Kohlewerkstoffen, die ihrerseits wiederum zur Kombination mit Elementen aus Aluminiumoxid vorgeschlagen wurden, in einer Vielzahl von Einsatzgebieten nicht mit vollem Erfolg einsetzbar waren, ist die Kombination von Elementen aus Siliziumnitridwerkstoff und Aluminiumoxid als überraschend anzusehen.

Die in Ansprüchen und Beschreibung verwendete Bezeichnung: Werkstoff auf Basis Siliziumnitrid, bei dem der Anteil der Siliziumnitridkristalle und/oder der Siliziumnitridmischkristalle bei mindestens 60 Gew.% liegt, umfaßt alle Siliziumnitridwerkstoffe mit Kristallphasen in diesem zahlenmäßigen Bereich. Unter Mischkristallen sind dabei solche zu verstehen, bei denen Si - durch Al - und N - durch O-Atome ersetzt sind. Erfindungsgemäß sind besonders bevorzugt solche Gleitelemente, die aus Werkstoffen mit einem Anteil von mindestens 80 Gew.% Siliziumnitridphase bestehen. Desweiteren sind bevorzugt Gleitelemente, die einen Anteil von mindestens 80 Gew.% Siliziumaluminiumoxinitrid aufweisen. Gemäß einer weiteren bevorzugten Ausführungsform liegt die Siliziumnitridphase in der $\alpha$- oder $\beta$-Phase und die Siliziumnitridmischkristallphase in der $\beta'$-Mischkristallphase vor. Die $\beta$- und $\beta'$-Phasen sind besonders bevorzugt. Der Rest des Werkstoffes kann aus einer Glasphase aus z. B.: $SiO_2$ und Yttriumverbindungen mit anderer Kristallstruktur als $Si_3N_4$ bestehen.

Der in Beschreibung und Ansprüchen verwendete Begriff Werkstoff auf Basis von Aluminiumoxid umfaßt auch Werkstoffe, die neben Aluminiumoxid noch weitere Oxide wie z. B. Magnesiumoxid und ähnliche als Sinterhilfsmittel enthalten und auch solche Aluminiumoxide, die noch einen gewissen Prozentsatz Zirkoniumoxid zur Verbesserung ihrer Festigkeit enthalten und die unter der Bezeichnung: Dispersionskeramik bekanntgeworden sind.

Die üblichen Verunreinigungen, die z. B. durch den Mahlabrieb in unvermeidbarer Weise in den Stoff gelangen können, sind im Rahmen der vorliegenden Erfindung in geringen Anteilen zugelassen, bevorzugt liegt der Anteil solcher Verunreinigungen, zu denen z. B. Eisen, Wolfram, Aluminium, Zirkonium, Cer, Kohlenstoff und Sauerstoff zu zählen sind, jedoch in einer Menge von nicht mehr als 3 Gew.% vor.

Gemäß einer besonders bevorzugten Ausführungsform besteht bei einer Gleitelementepaarung das Gleitelement aus: 4 bis 15 Gew.% Yttriumoxid, die ganz oder teilweise gegen 1 bis 5 Gew.% Magnesiumoxid ausgetauscht sein können, 0 bis 10 Gew.% Siliziumdioxid, 0 bis 10 Gew.% Aluminiumoxid und 0 bis 4 Gew.% Eisenoxid, Rest Siliziumnitrid, wobei sich alle Gewichtsteile auf 100 Gew.% ergänzen.

Gemäß bevorzugten Ausführungsformen bestehen die Gleitelemente aus durch druckloses Sintern oder durch Reaktionssintern einer geformten Pulvermischung hergestellten Formkörpern. Dadurch sind auch komplizierte Geometrien der Gleitelemente möglich, wodurch die Ausbildung in geringerer Stärke ermöglicht wird, was im Falle von Dichtscheiben einer sanitären Mischbatterie die Herstellung kleinerer Armaturen ermöglicht. Zur Erzielung einer besonders hohen Dichte und einer geringen Porosität und damit auch einer höheren Festigkeit kann an den Sinterprozeß ein heißisostatischer Nachverdichtungsvorgang angeschlossen werden.

Die Verwendung der erfindungsgemäßen Gleitelementepaarung ist in weiten Bereichen der Technik möglich, besonders bevorzugt erfolgt die Verwendung als Dichtscheibe in einer Mischbatterie oder als Gleitring in einer Gleitringdichtung. Sofern konstruktive Maßnahmen dabei eine kompliziertere Ausbildung entweder des Gleitelementes oder des Gegenelementes erfordern, ist vorzugsweise die Ausbildung jeweils des Elementes, das die kompliziertere Form aufweist, aus dem erfindungsgemäß vorgesehenen Werkstoff auf Basis von Siliziumnitrid vorgesehen. Dadurch entsteht der Vorteil, daß das aus Siliziumnitrid ausgebildete Element infolge der hohen Thermoschockunempfindlichkeit dieses Werkstoffes zu einem besonders hohen Gebrauchswert der Gleitelementepaarung führt.

Zur Herstellung der erfindungsgemäß vorgesehenen Gleitelemente dienen die an sich bekannten Verfahren und Vorrichtungen des keramischen Betriebes.

Nach dem Sintervorgang unter Schutzgas schließt sich dabei zur Ausbildung ebener Oberflächen ein üblicher mechanischer Schlief-, Läpp- oder Polierprozeß an.

Wird erfindungsgemäß das Gleitelement aus Siliziumnitrid in einer sanitären Mischbatterie eingesetzt, entsteht ein weiterer Vorteil dadurch, daß auf die bei der Konstruktion der Mischbatterien an sich üblichen Kunststoffeinsätze zur Dämpfung der Krafteinleitung auf die Ventildichtscheibe verzichtet werden kann. Auch dies ist insofern überraschend, als aufgrund der Festigkeitswerte von Siliziumnitrid im Vergleich z.B. zu Aluminiumoxidkeramik nicht erwartet werden durfte, daß auf den Einsatz der bekannten Kunststoffeinsätze verzichtet werden konnte.

Beispiel:

Eine Pulvermischung, bestehend aus

6 Gew.-Teilen Yttriumoxid,
3 Gew.-Teilen Siliziumdioxid,
2,5 Gew.-Teilen Aluminiumoxid,
Rest Siliziumnitrid

wird nach gründlicher Mahlung bis in den Submikronbereich und Homogenisierung in Form einer üblichen Ventildichtscheibe gepreßt und drucklos gesintert. Der Preßdruck betrug 1500 bar, der Sinterungsprozeß wurde unter Stickstoffatmosphäre bei einer Temperatur von 1750 °C und 1 h durchgeführt. Die erhaltene Dichtscheibe wurde auf eine Ebenheit von 2 Lichtbändern und einen Tragflächenanteil von 80 % geschliffen und poliert.

Die durchschnittliche Korngröße in der fertigen Dichtscheibe beträgt 2 μm.

Zur Feststellung der Reibungskräfte wurde ein Gleitelement in Form eines stiftförmigen Prüfkörpers aus dem Werkstoff gemäß Beispiel hergestellt, seine Oberfläche geschliffen und poliert und der Prüfling auf dem Reibungswertprüfstand gegen einen aus Aluminiumoxid bestehenden Prüfkörper in Form einer Dichtscheibe untersucht. Zum Vergleich wurden bauartgleiche Prüfkörper aus Aluminiumoxid ebenfalls mit geschliffener und polierter Oberfläche gegeneinander untersucht. Die erhaltenen Ergebnisse der Gleitreibungs- bzw. Haftreibungskoeffizienten gehen aus nachfolgender Tabelle hervor:

Tabelle: .

| Prüfkörper Reibungs- partner | Schmierung | Gleitrei- bungsko- effizient u | Haftrei- bungsko- effizient $u_O$ |
|---|---|---|---|
| $Si_3N_4$ gem.Beisp./ $Al_2O_3$ | trocken | 0,095 | 0,125 |
| | ölgeschmiert | 0,05 | 0,1 |
| $Al_2O_3/$ $Al_2O_3$ | trocken | 0,22 | 0,34 |
| | ölgeschmiert | 0,13 | 0,19 |

Die Tabelle zeigt eine deutliche Überlegenheit bei der Paarung eines erfindungsgemäßen Prüfkörpers gegen eine Aluminiumoxid-Dichtscheibe gegenüber der reinen Aluminiumoxidpaarung, insbesondere beim besonders wichtigen Haftreibungskoeffizienten ohne Schmierung. Dieser Wert ist ein Maßstab für die Loslösekraft nach Stillstand.

**Patentansprüche**

1. Gleitelementepaarung mit mindestens einem auf Basis von Siliziumnitrid hergestellten Gleitelement, das in reibendem und abdichtendem Eingriff mit mindestens einem Gegenelement steht, dadurch gekennzeichnet, daß das Gleitelement aus einem Werkstoff auf Basis Siliziumnitrid besteht, bei dem der Anteil der Siliziumnitridphase und/oder der Siliziumnitridmischkristallphase bei mindestens 60 Gew.% liegt und das Gegenelement aus einem Körper, der aus einem Werkstoff auf Basis von Aluminiumoxid gebildet ist, besteht.

2. Gleitelementepaarung nach Anspruch 1, dadurch gekennzeichnet, daß das Gleitelement einen Anteil der Siliziumnitridphase und/oder Siliziumnitridmischkristallphase von mindestens 80 Gew.% aufweist.

3. Gleitelementepaarung nach einem der Ansprüche 1 bis 2, dadurch gekennzeichnet, daß die Silizium-nitridphase in der α- oder β-Phase und die Siliziumnitridmischkristallphase in der β'-Phase vorliegt.

4. Gleitelementepaarung nach einem der Ansprüche 1 bis 3, dadurch gekennzeichnet, daß das Gleitelement aus einer Mischung, bestehend aus:
4,0 bis 15 Gew.% Yttriumoxid, die ganz oder teilweise gegen 1 bis 5 Gew.% MgO ausgetauscht sein können,
0 bis 10 Gew.% Siliziumdioxid
0 bis 10 Gew.% Aluminiumoxid
0 bis 4 Gew.% Eisenoxid
Rest Siliziumnitrid
hergestellt ist, wobei sich alle Gewichtsteile auf 100 Gew.% ergänzen.

5. Gleitelementepaarung nach einem der Ansprüche 1 bis 4, dadurch gekennzeichnet, daß das Gleitelement ein durch druckloses Sintern einer geformten und vorverdichteten Pulvermischung hergestell-ter Formkörper ist.

6. Gleitelementepaarung nach einem der Ansprüche 1 bis 6, dadurch gekennzeichnet, daß das Gleitelement ein durch Reaktionssintern einer geformten Pulvermischung hergestellter Formkörper ist.

7. Gleitelementepaarung nach einem der Ansprüche 1 bis 6, dadurch gekennzeichnet, daß das gesinterte oder reaktionsgesinterte Gleitelement anschließend heißisostatisch nachverdichtet ist.

8. Gleitelementepaarung nach einem der Ansprüche 1 bis 7, dadurch gekennzeichnet, daß Gleit- und Gegenelement als Scheiben eines Ventils ausgebildet sind.

9. Gleitelementepaarung nach einem der Ansprüche 1 bis 7, dadurch gekennzeichnet, daß Gleit- und Gegenelement als Elemente einer axialen Gleitringdichtung ausgebildet sind.

**Claims**

1. A pair of sliding members with at least one sliding member manufactured on the basis of silicon nitride, which sliding member is in frictional and seal-forming engagement with at least one counter-member, characterized in that the sliding member consists of a material on a silicon nitride basis, in which the proportion of the silicon nitride phase and/or the proportion of the silicon nitride mixed crystal phase is at least 60% by weight, and the counter-member consists of a body which is formed from a material on an aluminium oxide basis.

2. A pair of sliding members according to claim 1, characterized in that the sliding member has a proportion of silicon nitride phase and/or silicon nitride mixed crystal phase of at least 80% by weight.

3. A pair of sliding members according to one of claims 1 to 2, characterized in that the silicon nitride phase is in the α- or β-phase and the silicon nitride mixed crystal phase is in the β'-phase.

4. A pair of sliding members according to one of claims 1 to 3, characterized in that the sliding member is manufactured from a mixture consisting of:
4.0 to 15% by weight of yttrium oxide which can be exchanged wholly or partially for 1 to 5% by weight of MgO,
0 to 10% by weight of silicon dioxide,
0 to 10% by weight of aluminium oxide,
0 to 4% by weight of iron oxide,
remainder silicon nitride,
wherein all parts by weight add up to 100% by weight.

5. A pair of sliding members according to one of claims 1 to 4, characterized in that the sliding member is a moulded body manufactured by pressure-less sintering of a moulded and pre-compressed powder mixture.

6. A pair of sliding members according to one of claims 1 to 6, characterized in that the sliding member is a moulded manufactured by reaction-sintering of a moulded powder mixture.

7. A pair of sliding members according to one of claims 1 to 6, characterized in that the sintered or reaction-sintered sliding member is subsequently compressed by hot isostatic pressing.

8. A pair of sliding members according to one of claims 1 to 7, characterized in that the sliding member and the counter-member are constructed as discs of a valve.

9. A pair of sliding members according to one of claims 1 to 7, characterized in that the sliding member and the counter-member are constructed as elements of an axial bearing ring seal.

**Revendications**

1. Paire d'éléments glissants, comportant au moins un élément glissant fabriqué à base de nitrure de silicium qui est en contact de frottement et d'étanchéité avec au moins un contre-élément, caractérisée en ce que l'élément glissant est constitué d'un matériau à base de nitrure de silicium, dans lequel la proportion de la phase nitrure de silicium et/ou de la solution solide de nitrure de silicium est d'au moins 60% en poids et le contre-élément est constitué d'un corps qui est formé d'un matériau à base d'oxyde d'aluminium.

2. Paire d'éléments glissants selon la revendication 1, caractérisée en ce que l'élément glissant présente une proportion d'au moins 80% en poids en phase nitrure de silicium et/ou en solution solide de nitrure de silicium.

3. Paire d'éléments glissants selon l'une des revendications 1 et 2, caractérisée en ce que la phase nitrure de silicium se présente sous forme de phase α ou de phase β et la solution solide de nitrure de silicium se présente sous forme de phase β'.

4. Paire d'éléments glissants selon l'une des revendications 1 à 3, caractérisée en ce que l'élément glissant est fabriqué à partir d'un mélange constitué de:
4 à 15% en poids d'oxyde d'yttrium, qui peuvent être entièrement ou partiellement remplacés par 1 à 5% en poids de MgO,
0 à 10% en poids de dioxyde de silicium,
0 à 10% en poids d'oxyde d'aluminium,
0 à 4% en poids d'oxyde de fer,
le reste étant du nitrure de silicium,
toutes les parties en poids faisant un total de 100% en poids.

5. Paire d'éléments glissants selon l'une des revendications 1 à 4, caractérisée en ce que l'élément glissant est un corps moulé fabriqué par frittage à la pression atmosphérique d'un mélange de poudre façonné et précomprimé.

6. Paire d'éléments glissants selon l'une des revendications 1 à 5, caractérisée en ce que l'élément glissant est un corps moulé fabriqué par frittage-réaction d'un mélange de poudre façonné.

7. Paire d'éléments glissants selon l'une des revendications 1 à 6, caractérisée en ce que l'élément glissant obtenu par frittage ou par frittage-réaction subit ensuite une recompression isostatique à température élevée.

8. Paire d'éléments glissants selon l'une des revendications 1 à 7, caractérisée en ce que l'élément glissant et le contre-élément constituent les disques d'étanchéité d'une vanne.

9. Paire d'éléments glissants selon l'une des revendications 1 à 7, caractérisée en ce que l'élément glissant et le contre-élément constituent les éléments d'une garniture étanche axiale à anneau glissant.